# EUROPEAN PATENT SPECIFICATION

(11) **EP 4 402 987 B1**
(45) Date of publication and mention of the grant of the patent: **04.11.2026**
(21) Application number: 21957116.3
(22) Date of filing: 17.09.2021
(51) Int. Cl.: H04W 80/04, H04L 12/46, H04L 45/02, H04L 45/745

(54) **METHOD AND APPARATUS FOR SELECTIVE IMPORTING IP ROUTE**
VERFAHREN UND VORRICHTUNG ZUM SELEKTIVEN IMPORTIEREN EINER IP-ROUTE
PROCÉDÉ ET APPAREIL D'IMPORTATION SÉLECTIVE DE ROUTE IP

(43) Date of publication of application: 24.07.2024
(73) Proprietor: Telefonaktiebolaget LM Ericsson (publ), 164 83 Stockholm (SE)
(72) Inventor: ZHOU, Zhe, Beijing 100102 (CN); ZHANG, Congjie, Beijing 100102 (CN); WANG, Jie, Beijing 100102 (CN); HE, Jiang, Beijing 100102 (CN)
(74) Representative: Zacco Sweden AB
(86) International application number: PCT/CN2021/119062
(87) International publication number: WO 2023/039831

(56) References cited:
- CN-A- 102 281 533
- CN-A- 111 800 338
- US-A1- 2008 267 187
- US-A1- 2017 373 973
- SAJASSI S SALAM S THORIA CISCO SYSTEMS J DRAKE JUNIPER J RABADAN NOKIA A: "Integrated Routing and Bridging in EVPN draft-ietf-bess-evpn-inter-subnet-forwarding-15; draft-ietf-bess-evpn-inter-subnet-forwarding-15.txt", no. 15, 27 July 2021 (2021-07-27), pages 1 - 36, XP015147203, Retrieved from the Internet <URL:https://tools.ietf.org/html/draft-ietf-bess-evpn-inter-subnet-forwarding-15> [retrieved on 20210727]
- 11 June 2012 (2012-06-11), P. PILLAY-ESNAULT CISCO SYSTEMS P. MOYER POLLERE, INC. J. DOYLE JEFF DOYLE AND ASSOCIATES E. ERTEKIN M. LUNDBERG BOOZ ALLEN HAMILT: "OSPFv3 as a Provider Edge to Customer Edge (PE-CE) Routing Protocol; rfc6565.txt", XP015081550, Database accession no. 6565

## Description

### TECHNICAL FIELD

The non-limiting and exemplary embodiments of the present disclosure generally relate to the technical field of communications, and specifically to methods and apparatuses for selective importing IP(Internet Protocol) route.

### BACKGROUND

This section introduces aspects that may facilitate a better understanding of the disclosure. Accordingly, the statements of this section are to be read in this light and are not to be understood as admissions about what is in the prior art or what is not in the prior art.

Layer 3 (i.e., Network Layer) forwarding among hosts across different broadcast domains (e.g., IP subnets) may be required in some networks.

EVPN (Ethernet Virtual Private Network) provides an extensible and flexible multi-homing VPN (Virtual Private Network) solution over an multi-protocol label switching (MPLS) core/IP network for intra-subnet connectivity among Tenant Systems (TSes) and End Devices that can be physical or virtual. An IP subnet is represented by an EVPN Instance (EVI) for a VLAN(Virtual Local Area Network)-based service or by an (EVI, VLAN) for a VLAN-aware bundle service. However, there are scenarios for which there is a need for a dynamic and efficient inter-subnet connectivity among these Tenant Systems and End Devices while maintaining the multi-homing capabilities of EVPN. The EVPN IRB (Integrated Routing and Bridging) can address such requirements.

The inter-subnet communication is traditionally achieved at centralized L3 Gateway (L3GW) devices where all the inter-subnet forwarding is performed and all the inter-subnet communication policies are enforced. When two TSes belonging to two different subnets connected to the same PE wanted to communicate with each other, their traffic needed to be backhauled from the PE all the way to the centralized gateway where inter-subnet switching is performed and then back to the PE. For today's large multi-tenant data center, this scheme is very inefficient and sometimes impractical.

In order to overcome the drawback of the centralized layer-3 GW approach, IRB functionality is introduced on the PEs (also referred to as EVPN NVEs (Network Virtualization Edges)) attached to TSes in order to avoid inefficient forwarding of tenant traffic. When a PE with IRB capability receives tenant traffic over an Attachment Circuit (AC), it can not only locally bridge the tenant intra-subnet traffic but also can locally route the tenant inter-subnet traffic on a packet by packet basis thus meeting the requirements for both intra and inter-subnet forwarding and avoiding non-optimal traffic forwarding associated with centralized layer-3 GW approach.

As described in draft-ietf-bess-evpn-inter-subnet-forwarding-15 (an Internet-Draft of IETF (Internet Engineering Task Force)), in symmetric mode, when a PE (provider edge node) receives an EVPN MAC/IP (Medium Access Control/Internet Protocol) Advertisement route, it uses IP-VRF (VPN Routing and Forwarding table for IP routes) route target to identify a corresponding IP-VRF and imports the IP address into it. Once the PE receives a packet destined to the IP address, by lookup the imported IP route, the PE forwards the packet to the destination.

The patent application US 2017/373973 A1 (BICKHART RYAN [US] ET AL) 28 December 2017 (2017-12-28) discloses techniques for indicating, in an EVPN route advertisement, migration of a customer endpoint among provider edge (PE) devices where, as a result of the migration to a host machine reachable via a different provider edge device, the customer endpoint has a new L2 (e.g., MAC) address while retaining its L3 (e.g., IP) address.

### SUMMARY

The invention is defined by the independent claims. Furthermore, the embodiments of the invention are those defined by the claims. Moreover, examples and embodiments, which are not covered by the claims, are presented not as embodiments of the invention, but as background art or examples useful for understanding the invention. This summary is provided to introduce a selection of concepts in a simplified form that are further described below in the detailed description. This summary is not intended to identify key features or essential features of the claimed subject matter, nor is it intended to be used to limit the scope of the claimed subject matter.

There are some problems in the existing solutions for Layer 3 forwarding among hosts across different broadcast domains (e.g., IP subnets). For example, EVPN IRB introduces a large number of IP host routes (EVPN Route Type 2), which consume much more forwarding plane resources than before. There may be not sufficient resources for critical IP routes, such as BGP-LU (BGP (Border Gateway Protocol) Labeled Unicast) routes, host routes for local MAC-VRF/BT (Bridge Table), which may lead to traffic loss. If a receiving PE does not have the MAC-VRF/BT identified by the MAC/IP route, the importing to IP-VRF is not mandatory. At that time, the receiving PE can still forward the packet to the destination based on the route of the MAC-VRF/BT and/or the subnet of the IRB interface. Without the IP host routes, sometimes sub-optimal routing can happen.

To overcome or mitigate at least one above mentioned problems or other problems, an improved solution for importing IP route may be desirable.

In a first aspect of the disclosure, there is provided a method performed by a first provider edge node in a network. The method comprises receiving an Internet Protocol (IP) route for a customer device in a broadcast domain from a second provider edge node in the network. The method further comprises determining whether to import the IP route to an IP routing table of the first provider edge node based on a policy.

In an embodiment, the method further comprises importing the IP route to the IP routing table of the first provider edge node when determining to import the IP route to the IP routing table of the first provider edge node.

In an embodiment, the method further comprises skipping importing the IP route to the IP routing table of the first provider edge node when determining to skip importing the IP route to the IP routing table of the first provider edge node.

In an embodiment, determining whether to import the IP route to an IP routing table of the first provider edge node based on a policy comprises determining to import the IP route to the IP routing table of the first provider edge node when at least one customer device connected to the first provider edge node is in the broadcast domain.

In an embodiment, determining whether to import the IP route to an IP routing table of the first provider edge node based on a policy comprises determining whether to import the IP route to the IP routing table of the first provider edge node based on an importing policy when no customer device connected to the first provider edge node is in the broadcast domain.

In an embodiment, the importing policy is determined based on at least one of resource utilization or administrative control.

In an embodiment, the importing policy comprises at least one of when resource consumption is beyond or equal to a threshold, disabling IP route importing, when resource consumption is below the threshold, enabling IP route importing, when a configuration indicates enabling the IP route importing, enabling IP route importing, or when a configuration indicates disabling the IP route importing, disabling IP route importing.

In an embodiment, the IP route comprises an Ethernet Virtual Private Network (EVPN) Medium Access Control/Internet Protocol (MAC/IP) Advertisement Route.

In an embodiment, the IP routing table comprises a Virtual Private Network (VPN) Routing and Forwarding table for IP routes.

In an embodiment, the broadcast domain corresponds to a Virtual Local Area Network (VLAN).

In an embodiment, the network comprises Ethernet Virtual Private Network (EVPN) Integrated Routing and Bridging (IRB) feature.

In a second aspect of the disclosure, there is provided a first provider edge node in a network. The first provider edge node comprises a processor and a memory coupled to the processor. Said memory contains instructions executable by said processor. Said first provider edge node is operative to receive an Internet Protocol (IP) route for a customer device in a broadcast domain from a second provider edge node in the network. Said first provider edge node is further operative to determine whether to import the IP route to an IP routing table of the first provider edge node based on a policy.

In a third aspect of the disclosure, there is provided a first provider edge node. The first provider edge node comprises a receiving module and a determining module. The receiving module may be configured to receive an Internet Protocol (IP) route for a customer device in a broadcast domain from a second provider edge node in the network. The determining module may be configured to determine whether to import the IP route to an IP routing table of the first provider edge node based on a policy.

In an embodiment, the first provider edge node further comprises an importing module configured to import the IP route to the IP routing table of the first provider edge node when determining to import the IP route to the IP routing table of the first provider edge node.

In an embodiment, the first provider edge node further comprises a skipping module configured to skip importing the IP route to the IP routing table of the first provider edge node when determining to skip importing the IP route to the IP routing table of the first provider edge node.

In a fourth aspect of the disclosure, there is provided a computer program product comprising instructions which, when executed on at least one processor, cause the at least one processor to carry out any of the method according to the first aspect of the disclosure.

In a fifth aspect of the disclosure, there is provided a computer-readable storage medium storing instructions which, when executed on at least one processor, cause the at least one processor to carry out any of the method according to the first aspect of the disclosure.

Embodiments herein afford many advantages, of which a non-exhaustive list of examples follows. In some embodiments herein, the proposed solution can protect critical routes from being out of resource. In some embodiments herein, the proposed solution can optimize forwarding plane resource utilization. In some embodiments herein, the proposed solution can enable flexible compromise between resource utilization and optimal forwarding. In some embodiments herein, the proposed solution can be compliant to EVPN IRB specification. In some embodiments herein, there is no inter-operability issue due to local behavior on the provide edge device. The embodiments herein are not limited to the features and advantages mentioned above. A person skilled in the art will recognize additional features and advantages upon reading the following detailed description.

### BRIEF DESCRIPTION OF THE DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG.1 shows an example of system architecture according to an embodiment of the present disclosure;
FIG.2 shows a flowchart of a method according to an embodiment of the present disclosure;
FIG.3 shows a flowchart of a method according to another embodiment of the present disclosure;
FIG.4 shows a flowchart of a selective IP route importing procedure according to an embodiment of the present disclosure;
FIG.5 shows an example of sub-optimal forwarding according to an embodiment of the present disclosure;
FIG.6 is a block diagram showing an apparatus suitable for practicing some embodiments of the disclosure; and
FIG.7 is a block diagram showing a first provider edge node according to an embodiment of the disclosure.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "network" refers to a network following any suitable (wireless or wired) communication standards. In the following description, the terms "network" and "system" can be used interchangeably. Furthermore, the communications between two communication devices in the network may be performed according to any suitable communication protocols, including, but not limited to, the communication protocols as defined by a standard organization such as IETF. For example, the communication protocols may comprise various route protocols, switching protocols and/or any other protocols either currently known or to be developed in the future.

As used herein, the term "provider edge node" or " provider edge device (PE)" refers to a network function (NF) which can be implemented in a network element (physical or virtual) of a communication network. For example, the provider edge node or PE can be implemented either as a network element on a dedicated hardware, as a software instance running on a dedicated hardware, or as a virtualized function instantiated on an appropriate platform, e.g. on a cloud infrastructure.

Virtualizing means creating virtual versions of apparatuses or devices which may include virtualizing hardware platforms, storage devices and networking resources. As used herein, virtualization can be applied to a provider edge node and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments hosted by one or more of hardware nodes. Further, in embodiments in which the virtual node is not a radio access node or does not require radio connectivity (e.g., a core network node), then the provider edge node or PE may be entirely virtualized.

The functions may be implemented by one or more applications (which may alternatively be called software instances, virtual appliances, network functions, virtual nodes, virtual network functions, etc.) operative to implement some of the features, functions, and/or benefits of some of the embodiments disclosed herein. Applications are run in virtualization environment which provides hardware comprising processing circuitry and memory. Memory contains instructions executable by processing circuitry whereby application is operative to provide one or more of the features, benefits, and/or functions disclosed herein.

Virtualization environment, comprises general-purpose or special-purpose network hardware devices comprising a set of one or more processors or processing circuitry, which may be commercial off-the-shelf (COTS) processors, dedicated Application Specific Integrated Circuits (ASICs), or any other type of processing circuitry including digital or analog hardware components or special purpose processors. Each hardware device may comprise memory which may be non-persistent memory for temporarily storing instructions or software executed by processing circuitry. Each hardware device may comprise one or more network interface controllers (NICs), also known as network interface cards, which include physical network interface. Each hardware device may also include non-transitory, persistent, machine-readable storage media - having stored therein software and/or instructions executable by processing circuitry. Software may include any type of software including software for instantiating one or more virtualization layers (also referred to as hypervisors), software to execute virtual machines as well as software allowing it to execute functions, features and/or benefits described in relation with some embodiments described herein.

Virtual machines, comprise virtual processing, virtual memory, virtual networking or interface and virtual storage, and may be run by a corresponding virtualization layer or hypervisor. Different embodiments of the instance of virtual appliance may be implemented on one or more of virtual machines, and the implementations may be made in different ways.

During operation, processing circuitry executes software to instantiate the hypervisor or virtualization layer, which may sometimes be referred to as a virtual machine monitor (VMM). Virtualization layer may present a virtual operating platform that appears like networking hardware to virtual machine.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

As used herein, the phrase "at least one of A and B" or "at least one of A or B" should be understood to mean "only A, only B, or both A and B." The phrase "A and/or B" should be understood to mean "only A, only B, or both A and B."

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

It is noted that these terms as used in this document are used only for ease of description and differentiation among nodes, devices or networks etc. With the development of the technology, other terms with the similar/same meanings may also be used.

In the following description and claims, unless defined otherwise, all technical and scientific terms used herein have the same meaning as commonly understood by one of ordinary skills in the art to which this disclosure belongs.

It is noted that some embodiments of the present disclosure are mainly described in relation to the EVPN IRB being used as non-limiting examples for certain exemplary network configurations and system deployments. As such, the description of exemplary embodiments given herein specifically refers to terminology which is directly related thereto. Such terminology is only used in the context of the presented non-limiting examples and embodiments, and does naturally not limit the present disclosure in any way. Rather, any other system configuration may equally be utilized as long as exemplary embodiments described herein are applicable.

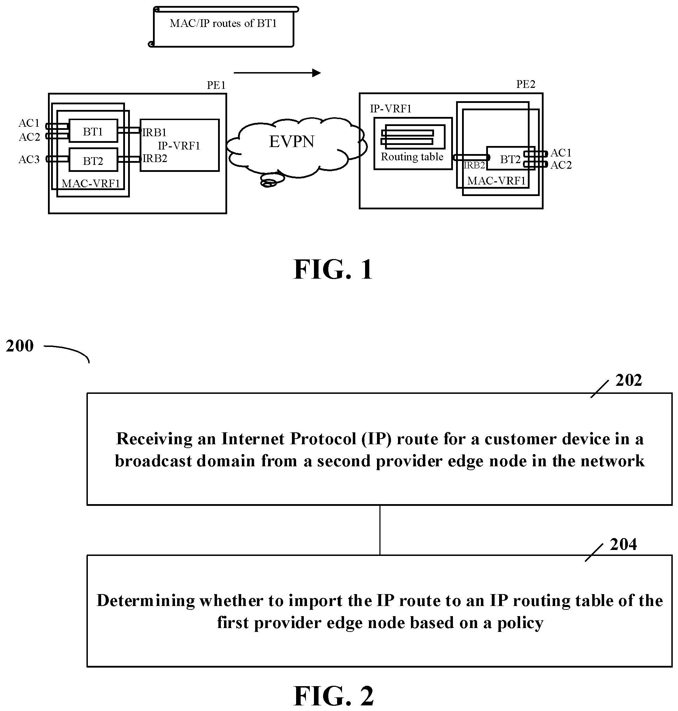

Although the subject matter described herein may be implemented in any appropriate type of system using any suitable components, the embodiments disclosed herein are described in relation to a communication system complied with the exemplary system architecture illustrated in FIG. 1. For simplicity, the system architecture of FIG.1 only depict some exemplary elements. In practice, a communication system may further include any additional elements suitable to support communication between any two communication devices. The communication system may provide communication and various types of services to one or more customer devices to facilitate the customer devices' access to and/or use of the services provided by, or via, the communication system.

FIG.1 shows an example of system architecture according to an embodiment of the present disclosure. The system may comprise two provider edge nodes (PEs) simply denoted as PE1 and PE2 which can communicate with each other over a network 20. Each PE may connect to one or more CEs (Customer Edge devices) or customer devices over Attachment Circuit (AC). Although two PEs are shown in FIG. 1, there may be more or less PEs.

The network 20 may be any suitable network. The network 20 may be, for example, an IP based network, or an MPLS based network, or a combination thereof. In an embodiment, the network 20 may be EVPN with IRB feature.

The CE enables a customer device to connect to the PE. The customer device may be, for example, a terminal device a mobile phone, a pad computer, a laptop computer, a desktop computer, or any other devices with wired and/or wireless communication capability. The CE may be a host, a router, a switch, a gateway, a modem, a firewall, a network interface controller (NIC), a hub, a bridge, or any other type of data transfer device. The PE is an edge node of the network 20 and functions as an edge device responsible for providing the customer device with VPN service such as EVPN services. The PE may be, for example, a router, a switch, a gateway, a modem, a firewall, an NIC, a hub, a bridge, or any other type of data transfer device. As described above, PE can be a virtual instance/functionality.

As an exemplary example, it is assumed that an enterprise has CEs (for example, application servers) deployed in multiple data centers at different locations to communicate with each other within the same L3VPN (layer 3 VPN). As the data centers are interconnected through transport networks such as IP/MPLS, then, the EVPN IRB may be used to accommodate L3VPN services over the transport networks connecting to these data centers. These CE devices located in different data centers can be considered as belonging to the same EVPN instance.

A tenant needing IRB services on a PE, requires an IP Virtual Routing and Forwarding table (IP-VRF) along with one or more MAC Virtual Routing and Forwarding tables (MAC-VRFs). An IP-VRF, as defined in Internet Engineering Task Force (IETF) Request for Comments (RFC) 4364, is the instantiation of an IPVPN instance in a PE. A MAC-VRF, as defined in IETF RFC7432, is the instantiation of an EVI (EVPN Instance) in a PE. A MAC-VRF consists of one or more bridge tables, where each bridge table corresponds to a VLAN (broadcast domain). If service interfaces for an EVPN PE are configured in VLAN- Based mode (i.e., section 6.1 of IETF RFC7432), then there is only a single bridge table per MAC-VRF (per EVI) - i.e., there is only one tenant VLAN per EVI. However, if service interfaces for an EVPN PE are configured in VLAN-Aware Bundle mode (i.e., section 6.3 of IETF RFC7432), then there are several bridge tables per MAC-VRF (per EVI) - i.e., there are several tenant VLANs per EVI.

Each bridge table is connected to an IP-VRF via an L3 interface called IRB interface. Since a single tenant subnet is typically represented by a VLAN (and thus supported by a single bridge table), for a given tenant there are as many bridge tables as there are subnets and thus there are also as many IRB interfaces between the tenant IP-VRF and the associated bridge tables.

FIG.2 shows a flowchart of a method according to an embodiment of the present disclosure, which may be performed by an apparatus implemented in or at or as a first provider edge node in a network or communicatively coupled to the first provider edge node. As such, the apparatus may provide means or modules for accomplishing various parts of the method 200 as well as means or modules for accomplishing other processes in conjunction with other components.

The network may be any suitable communication network. For example, the network may be the network which can provide virtual network service. The network may be the network which can provide intra and inter-subnet forwarding service. The network may be the network which can provide Layer 3 forwarding service. In an embodiment, the network may comprise Ethernet Virtual Private Network (EVPN) Integrated Routing and Bridging (IRB) feature for example as described in draft-ietf-bess-evpn-inter-subnet-forwarding-15.

The first provider edge node may be any suitable device. As described above, the first provider edge node can be a virtual instance/functionality. For example, the first provider edge node may be an edge device with IRB capability. The first provider edge node may be attached to one or more Tenant Systems (TSes). When the first provider edge node with IRB capability receives tenant traffic over an Attachment Circuit (AC), it can not only locally bridge the tenant intra-subnet traffic but also can locally route the tenant inter-subnet traffic on a packet by packet basis thus meeting the requirements for both intra and inter-subnet forwarding. In an embodiment, the first provider edge node may be PE with IRB capability as described in draft-ietf-bess-evpn-inter-subnet-forwarding-15.

At block 202, the first provider edge node may receive an Internet Protocol (IP) route for a customer device in a broadcast domain from a second provider edge node in the network.

The second provider edge node may be any suitable device. As described above, the second provider edge node can be a virtual instance/functionality. For example, the second provider edge node may be an edge device with IRB capability. The second provider edge node may be attached to one or more Tenant Systems (TSes). When the first provider edge node with IRB capability receives tenant traffic over an Attachment Circuit (AC), it can not only locally bridge the tenant intra-subnet traffic but also can locally route the tenant inter-subnet traffic on a packet by packet basis thus meeting the requirements for both intra and inter-subnet forwarding. In an embodiment, the second provider edge node may be PE with IRB capability as described in draft-ietf-bess-evpn-inter-subnet-forwarding-15.

A broadcast domain is a collection of network devices that receive broadcast traffic from each other. As per IETF RFC7432, an EVI consists of a single or multiple broadcast domains. In the case of VLAN-bundle and VLAN-based service models (see IETF RFC7432), a broadcast domain is equivalent to an EVI. In the case of VLAN-aware bundle service model, an EVI contains multiple broadcast domains. In an embodiment, broadcast domain and subnet are equivalent terms and wherever "subnet" is used, it means "IP subnet". In an embodiment, the broadcast domain corresponds to a Virtual Local Area Network (VLAN).

The IP route may comprise any suitable information. In an embodiment, the IP route comprises an Ethernet Virtual Private Network (EVPN) Medium Access Control/Internet Protocol (MAC/IP) Advertisement Route. For example, the IP route may be same as the MAC/IP Advertisement Route as described in section 7.2 of IETF RFC7432.

At block 204, the first provider edge node may determine whether to import the IP route to an IP routing table of the first provider edge node based on a policy. The policy may be predefined or configured in the first provider edge node. The policy in different provider edge nodes may be different for example depending on application scenarios or provider edge node performance.

In an embodiment, when at least one customer device connected to the first provider edge node is in the broadcast domain, the first provider edge node may determine to import the IP route to the IP routing table of the first provider edge node.

In an embodiment, when no customer device connected to the first provider edge node is in the broadcast domain (i.e., all customer devices connected to the first provider edge node are not in the broadcast domain), the first provider edge node may determine whether to import the IP route to the IP routing table of the first provider edge node based on an importing policy. The importing policy may be predefined or configured in the first provider edge node. The importing policy in different provider edge nodes may be different for example depending on application scenarios or provider edge node performance.

The importing policy may be determined in various ways. In an embodiment, the importing policy is determined based on at least one of resource utilization or administrative control. In addition, the importing policy may be determined based on priority of IP route, user profile, etc.

Flexible policy control can be implemented to decide importing or not. Thus critical IP host routes are protected.

The importing policy can be based on forwarding plane resource utilization status, and/or administrative control.
- Resource utilization based: A threshold may be defined (for example, 60%) and when resource consumption is beyond or equal to the threshold, the first provider edge node may disable the IP host routes importing. When resource consumption is below the threshold, the first provider edge node may enable the IP host route importing.
- Administrative control based: It is a configuration (on/off) to enable/disable the IP route importing. When enabled, the first provider edge node may import the received IP host routes to forwarding plane. When disabled, the first provider edge node may not import the received IP host routes to forwarding plane.

There can be other policies and their combinations to determine importing or not.

As a first example, a threshold is defined for routing table utilization on MAC/IP routes, for example, 60%. If the threshold is not reached, IP host route importing is accepted. Otherwise, importing is stopped.

The threshold may be determined based on various ways such as predefined, configured, learnt by machine learning.

As a second example, administrator manually determines to import or not through configuration (on/off). When the configuration is on, IP host route importing is accepted. otherwise, IP host route importing is rejected.

In an embodiment, the importing policy comprises at least one of:
- when resource consumption is beyond or equal to a threshold, disabling IP route importing,
- when resource consumption is below the threshold, enabling IP route importing,
- when a configuration indicates enabling the IP route importing, enabling IP route importing, or
- when a configuration indicates disabling the IP route importing, disabling IP route importing.

Disabling IP route importing means that the IP route can not be imported to the IP routing table of the first provider edge node. Enabling IP route importing means that the IP route can be imported to the IP routing table of the first provider edge node.

In an embodiment, the importing policy may be configured with a priority. When there are two or more importing policies, the importing policy with the highest priority will be used to determine whether to import the IP route to the IP routing table of the first provider edge node.

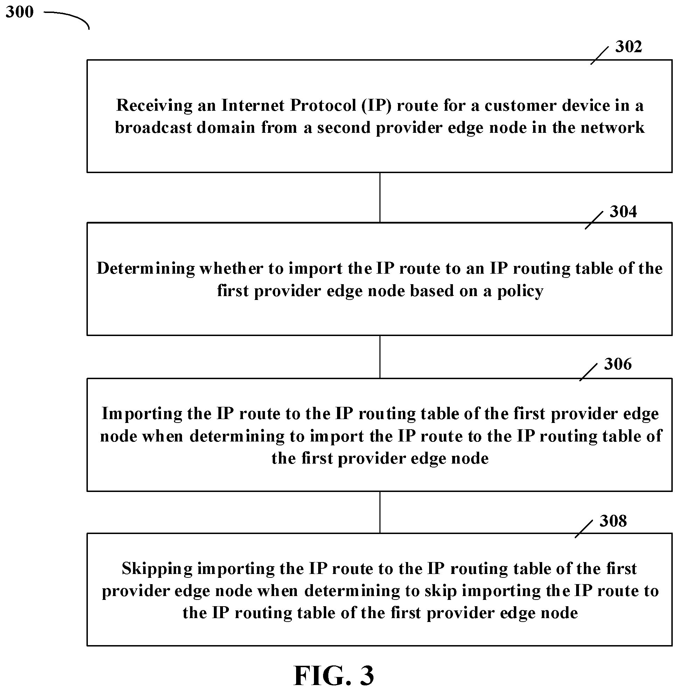

FIG.3 shows a flowchart of a method according to another embodiment of the present disclosure, which may be performed by an apparatus implemented in or at or as a first provider edge node in a network or communicatively coupled to the first provider edge node. As such, the apparatus may provide means or modules for accomplishing various parts of the method 300 as well as means or modules for accomplishing other processes in conjunction with other components. For some parts which have been described in the above embodiments, detailed description thereof is omitted here for brevity.

At block 302, the first provider edge node may receive an Internet Protocol (IP) route for a customer device in a broadcast domain from a second provider edge node in the network. Block 302 is same as block 202 of FIG.2.

At block 304, the first provider edge node may determine whether to import the IP route to an IP routing table of the first provider edge node based on a policy. Block 304 is same as block 204 of FIG.2.

At block 306, the first provider edge node may import the IP route to the IP routing table of the first provider edge node when determining to import the IP route to the IP routing table of the first provider edge node.

At block 308, the first provider edge node may skip import the IP route to the IP routing table of the first provider edge node when determining to skip importing the IP route to the IP routing table of the first provider edge node.

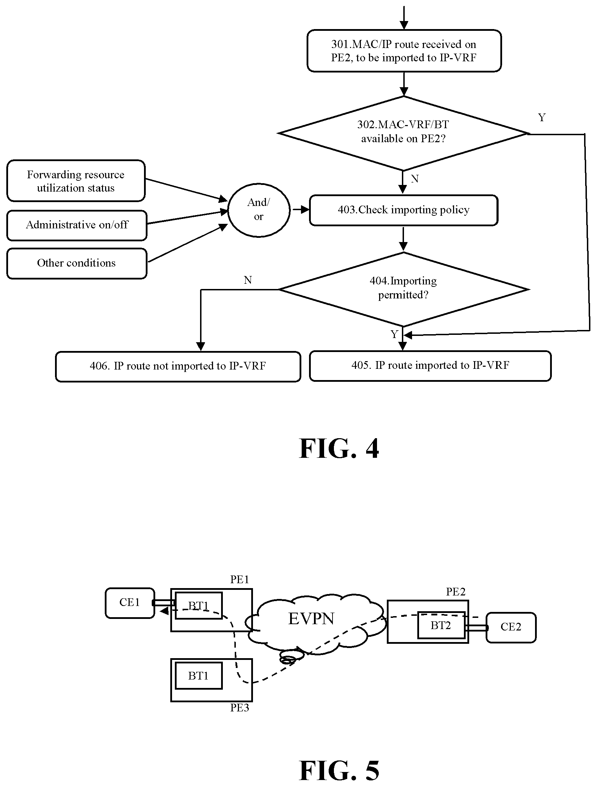

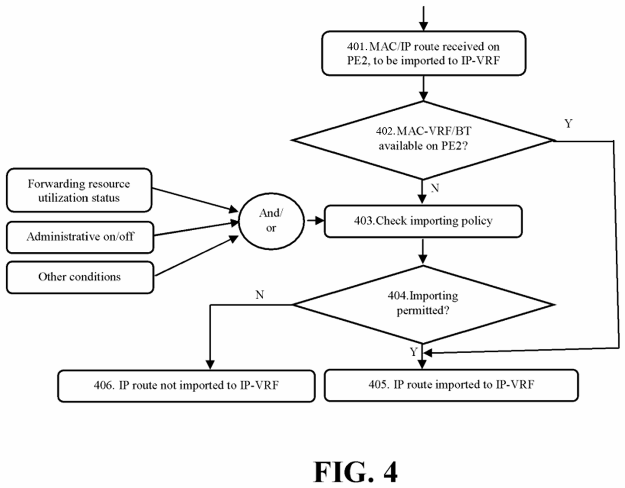

FIG.4 shows a flowchart of a selective IP route importing procedure according to an embodiment of the present disclosure. This embodiment is implemented in EVPN IRB.

Using FIG.1 as an example, PE2 receives an EVPN MAC/IP Advertisement route, which is advertised by PE1. PE2 then selectively imports received EVPN MAC/IP Advertisement route. On PE1, when IRB1 (10.10.10.0/24) is configured, this route is advertised via Border Gateway Protocol (BGP) (via traditional L3VPN or EVPN route type 5) to other PEs. On PE2 routing table, an entry of 10.10.10.0/24 -> PE1 is installed. On PE1, when a host route (10.10.10.6/32) is dynamically learnt on MAC-VRF1/BT1 (identified by Route Target/VLAN configured), this route is advertised via BGP (via EVPN route type 2, MAC/IP route) to other PEs.

At block 401, PE2 receives MAC/IP route to be imported to IP-VRF. On PE2, there is no MAC-VRF1/BT1 and policy control (resource utilization based as example here) is implemented before importing. For example, policy control for selective importing the IP host routes is implemented when the receiving PE does not have the corresponding MAC-VRF/BT.

At block 402, PE2 determines whether MAC-VRF1/BT1 is available on PE2. When MAC-VRF1/BT1 is available on PE2, the MAC/IP route is imported to IP-VRF1 at block 405.

At block 403, when MAC-VRF1BT1 is not available on PE2, PE2 checks importing policy. For example, the importing policy may comprises at least one of forwarding resource utilization status, administrative control (e.g., on/off) or other conditions.

At block 404, PE2 determines whether importing is permitted based on the importing policy. For example, on PE2, the routing table resource utilization is below 60% (a pre-configured threshold). Then an entry of 10.10.10.6/32 -> PE1 is installed (e.g., imported to IP-VRF1) at block 406. At a later time, another host route (10.10.10.7/32) is received by PE2, at this time the routing table resource utilization is beyond 60%, this host route is not installed to the routing table at block 405.

When a packet destined to 10.10.10.6 is arrived on PE2, after routing table lookup, the entry of 10.10.10.6/32 -> PE1 is hit. The packet is forwarded via this entry to PE1/IP-VRF1 and then to MAC-VRF1/BT1.

When a packet destined to 10.10.10.7 is arrived on PE2, after routing table lookup, the entry of 10.10.10.0/24 -> PE1 is hit. The packet is forwarded via this entry to PE1/IP-VRF1 and then to MAC-VRF1/BT1.

The various blocks/steps shown in FIGs.2-4 may be viewed as method steps, and/or as operations that result from operation of computer program code, and/or as a plurality of coupled logic circuit elements constructed to carry out the associated function(s). The schematic flow chart diagrams described above are generally set forth as logical flow chart diagrams. As such, the depicted order and labeled steps are indicative of specific embodiments of the presented methods. Other steps and methods may be conceived that are equivalent in function, logic, or effect to one or more steps, or portions thereof, of the illustrated methods. Additionally, the order in which a particular method occurs may or may not strictly adhere to the order of the corresponding steps shown.

FIG.5 shows an example of sub-optimal forwarding according to an embodiment of the present disclosure.

As described in FIG.5, sometimes sub-optimal forwarding could happen if the IP route is not accepted. At this time, PE2 can forward traffic to CE1 to either PE1 or PE3 based on load balance. About half traffic will be forwarded via sub-optimal path (PE2->PE3->PE1). Selective IP route importing accommodates compromise between forwarding resource utilization optimization and optimal forwarding. Policy control provides enough possibility and flexibility for compromise to customer.

Embodiments herein afford many advantages, of which a non-exhaustive list of examples follows. In some embodiments herein, the proposed solution can protect critical routes from being out of resource. In some embodiments herein, the proposed solution can optimize forwarding plane resource utilization. In some embodiments herein, the proposed solution can enable flexible compromise between resource utilization and optimal forwarding. In some embodiments herein, the proposed solution can be compliant to EVPN IRB specification. In some embodiments herein, there is no inter-operability issue due to local behavior on the provide edge device. The embodiments herein are not limited to the features and advantages mentioned above. A person skilled in the art will recognize additional features and advantages upon reading the following detailed description.

FIG.6 is a block diagram showing an apparatus suitable for practicing some embodiments of the disclosure. For example, the first provider edge node described above may be implemented as or through the apparatus 600.

The apparatus 600 comprises at least one processor 621, such as a digital processor (DP), and at least one memory (MEM) 622 coupled to the processor 621. The apparatus 620 may further comprise a transmitter TX and receiver RX 623 coupled to the processor 621. The MEM 622 stores a program (PROG) 624. The PROG 624 may include instructions that, when executed on the associated processor 621, enable the apparatus 620 to operate in accordance with the embodiments of the present disclosure. A combination of the at least one processor 621 and the at least one MEM 622 may form processing means 626 adapted to implement various embodiments of the present disclosure.

Various embodiments of the present disclosure may be implemented by computer program executable by one or more of the processor 621, software, firmware, hardware or in a combination thereof.

The MEM 622 may be of any type suitable to the local technical environment and may be implemented using any suitable data storage technology, such as semiconductor based memory devices, magnetic memory devices and systems, optical memory devices and systems, fixed memories and removable memories, as non-limiting examples.

The processor 621 may be of any type suitable to the local technical environment, and may include one or more of general purpose computers, special purpose computers, microprocessors, digital signal processors (DSPs) and processors based on multicore processor architecture, as non-limiting examples.

In an embodiment where the apparatus is implemented as or at the first provider edge node, the memory 622 contains instructions executable by the processor 621, whereby the first provider edge node operates according to any step of the methods related to the first provider edge node as described above.

FIG.7 is a block diagram showing a first provider edge node according to an embodiment of the disclosure. As shown, the first provider edge node 700 comprises a receiving module 702 and a determining module 704. The receiving module 702 may be configured to receive an Internet Protocol (IP) route for a customer device in a broadcast domain from a second provider edge node in the network. The determining module 704 may be configured to determine whether to import the IP route to an IP routing table of the first provider edge node based on a policy.

In an embodiment, the first provider edge node 700 further comprises an importing module 706 configured to import the IP route to the IP routing table of the first provider edge node when determining to import the IP route to the IP routing table of the first provider edge node.

In an embodiment, the first provider edge node 700 further comprises a skipping module 708 configured to skip importing the IP route to the IP routing table of the first provider edge node when determining to skip importing the IP route to the IP routing table of the first provider edge node.

The term unit or module may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

With function units, the first provider edge node may not need a fixed processor or memory, any computing resource and storage resource may be arranged from the first provider edge node in the communication system. The introduction of virtualization technology and network computing technology may improve the usage efficiency of the network resources and the flexibility of the network.

According to an aspect of the disclosure it is provided a computer program product being tangibly stored on a computer readable storage medium and including instructions which, when executed on at least one processor, cause the at least one processor to carry out any of the methods as described above.

According to an aspect of the disclosure it is provided a computer-readable storage medium storing instructions which when executed by at least one processor, cause the at least one processor to carry out any of the methods as described above.

In addition, the present disclosure may also provide a carrier containing the computer program as mentioned above, wherein the carrier is one of an electronic signal, optical signal, radio signal, or computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function or means that may be configured to perform one or more functions. For example, these techniques may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Exemplary embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

It will be obvious to a person skilled in the art that, as the technology advances, the inventive concept can be implemented in various ways. The above described embodiments are given for describing rather than limiting the disclosure, and it is to be understood that modifications and variations may be resorted to without departing from the scope of the disclosure as those skilled in the art readily understand. Such modifications and variations are considered to be within the scope of the disclosure and the appended claims. The protection scope of the disclosure is defined by the accompanying claims.

## Claims

1. A method (200) performed by a first provider edge node in a network, comprising:
receiving (202) an Internet Protocol, IP, route for a customer device in a broadcast domain from a second provider edge node in the network; and
determining (204) whether to import the IP route to an IP routing table of the first provider edge node based on a policy, wherein the determining comprises:
when at least one customer device connected to the first provider edge node is in the broadcast domain, determining to import the IP route to the IP routing table of the first provider edge node; and
when no customer device connected to the first provider edge node is in the broadcast domain, determining whether to import the IP route to the IP routing table of the first provider edge node based on an importing policy,
the method being **characterized in that** the importing policy is determined based on resource utilization of the IP routing table of the first provider edge node.

2. The method according to claim 1, further comprising:
importing (306) the IP route to the IP routing table of the first provider edge node when determining to import the IP route to the IP routing table of the first provider edge node; and/or
skipping (308) importing the IP route to the IP routing table of the first provider edge node when determining to skip importing the IP route to the IP routing table of the first provider edge node.

3. The method according to claim 1 or 2, wherein the importing policy is further based on administrative control.

4. The method according to claim 1 or 3, wherein the importing policy comprises at least one of:
when resource consumption is beyond or equal to a threshold, disabling IP route importing,
when resource consumption is below the threshold, enabling IP route importing,
when a configuration indicates enabling the IP route importing, enabling IP route importing, or
when a configuration indicates disabling the IP route importing, disabling IP route importing.

5. The method according to any of claims 1-4, wherein the IP route comprises an Ethernet Virtual Private Network, EVPN, Medium Access Control/Internet Protocol, MAC/IP, Advertisement Route.

6. The method according to any of claims 1-5, wherein the IP routing table comprises a Virtual Private Network, VPN, Routing and Forwarding table for IP routes.

7. The method according to any of claims 1-6, wherein the broadcast domain corresponds to a Virtual Local Area Network, VLAN.

8. The method according to any of claims 1-7, wherein the network comprises Ethemet Virtual Private Network, EVPN Integrated Routing and Bridging, IRB, feature.

9. A first provider edge node (600) in a network, comprising:
a processor (621); and
a memory (622) coupled to the processor (621), said memory (622) containing instructions executable by said processor (621), whereby said first provider edge node (600) is operative to:
receive an Internet Protocol, IP, route for a customer device in a broadcast domain from a second provider edge node in the network; and
determine whether to import the IP route to an IP routing table of the first provider edge node based on a policy, wherein to determine whether to import the IP route, the first provider edge node is operative to:
when at least one customer device connected to the first provider edge node is in the broadcast domain, determine to import the IP route to the IP routing table of the first provider edge node; and
when no customer device connected to the first provider edge node is in the broadcast domain, determine whether to import the IP route to the IP routing table of the first provider edge node based on an importing policy,
the first provider edge node being **characterized in that** the importing policy is determined based on resource utilization of the IP routing table of the first provider edge node.

10. The first provider edge node according to claim 9, wherein the first provider edge node is further operative to perform the method of any one of claims 2 to 8.

11. A computer-readable storage medium storing instructions which when executed by at least one processor, cause the at least one processor to perform the method according to any one of claims 1 to 8.

12. A computer program product comprising instructions which when executed by at least one processor, cause the at least one processor to perform the method according to any of claims 1 to 8.

## Patentansprüche

1. Verfahren (200), das durch einen ersten Anbieterrandknoten in einem Netzwerk durchgeführt wird, umfassend:
Empfangen (202) einer Internetprotokollroute, IP-Route, für eine Kundeneinrichtung in einer Broadcast-Domäne von einem zweiten Anbieterrandknoten in dem Netzwerk; und
Bestimmen (204), ob die IP-Route in eine IP-Routing-Tabelle des ersten Anbieterrandknotens basierend auf einer Richtlinie zu importieren ist, wobei das Bestimmen Folgenden umfasst:
wenn sich mindestens eine Kundeneinrichtung, die mit dem ersten Anbieterrandknoten verbunden ist, in der Broadcast-Domäne befindet, Bestimmen, die IP-Route in die IP-Routing-Tabelle des ersten Anbieterrandknotens zu importieren; und
wenn sich keine Kundeneinrichtung, die mit dem ersten Anbieterrandknoten verbunden ist, in der Broadcast-Domäne befindet, Bestimmen, ob die IP-Route in die IP-Routing-Tabelle des ersten Anbieterrandknotens basierend auf einer Importrichtlinie zu importieren ist; wobei das Verfahren **dadurch gekennzeichnet ist, dass** die Importrichtlinie basierend auf einer Ressourcennutzung der IP-Routing-Tabelle des ersten Anbieterrandknotens bestimmt wird.

2. Verfahren nach Anspruch 1, ferner umfassend:
Importieren (306) der IP-Route in die IP-Routing-Tabelle des ersten Anbieterrandknotens, wenn bestimmt wird, die IP-Route in die IP-Routing-Tabelle des ersten Anbieterrandknotens zu importieren; und/oder
Auslassen (308) des Importierens der IP-Route in die IP-Routing-Tabelle des ersten Anbieterrandknotens, wenn bestimmt wird, das Importieren der IP-Route in die IP-Routing-Tabelle des ersten Anbieterrandknotens auszulassen.

3. Verfahren nach Anspruch 1 oder 2, wobei die Importrichtlinie ferner auf einer administrativen Steuerung basiert.

4. Verfahren nach Anspruch 1 oder 3, wobei die Importrichtlinie mindestens eines von Folgendem umfasst:
wenn der Ressourcenverbrauch größer als oder gleich einem Schwellenwert ist, Deaktivieren des IP-Routen-Importierens,
wenn der Ressourcenverbrauch unter dem Schwellenwert liegt, Aktivieren des IP-Routen-Importierens,
wenn eine Konfiguration Aktivieren des IP-Routen-Importierens angibt, Aktivieren des IP-Routen-Importierens oder
wenn eine Konfiguration Deaktivieren des IP-Routen-Importierens angibt, Deaktivieren des IP-Routen-Importierens.

5. Verfahren nach einem der Ansprüche 1-4, wobei die IP-Route eine Ankündigungsroute eines Medium-Access-Control/Internetprotokolls MAC/IP für ein Ethernet Virtual Private Network, EVPN, umfasst.

6. Verfahren nach einem der Ansprüche 1-5, wobei die IP-Routing-Tabelle eine Routing- und-Weiterleitungs-Tabelle für IP-Routen für ein Virtual Private Network, VPN, umfasst.

7. Verfahren nach einem der Ansprüche 1-6, wobei die Broadcast-Domäne einem Virtual Local Area Network, VLAN, entspricht.

8. Verfahren nach einem der Ansprüche 1-7, wobei das Netzwerk ein Integrated-Routing-and-Bridging-Merkmal, IRB-Merkmal, für ein Ethernet Virtual Private Network, EVPN, umfasst.

9. Erster Anbieterrandknoten (600) in einem Netzwerk, umfassend:
einen Prozessor (621); und
einen Speicher (622), der an den Prozessor (621) gekoppelt ist, wobei der Speicher (622) Anweisungen enthält, die durch den Prozessor (621) ausführbar sind, wodurch der erste Anbieterrandknoten (600) zu Folgendem betreibbar ist:
Empfangen einer Internetprotokollroute, IP-Route, für eine Kundeneinrichtung in einer Broadcast-Domäne von einem zweiten Anbieterrandknoten in dem Netzwerk; und
Bestimmen, ob die IP-Route in eine IP-Routing-Tabelle des ersten Anbieterrandknotens basierend auf einer Richtlinie zu importieren ist, wobei zum Bestimmen, ob die IP-Route zu importieren ist, der erste Anbieterrandknoten zu Folgendem betreibbar ist:
wenn sich mindestens eine Kundeneinrichtung, die mit dem ersten Anbieterrandknoten verbunden ist, in der Broadcast-Domäne befindet, Bestimmen, die IP-Route in die IP-Routing-Tabelle des ersten Anbieterrandknotens zu importieren; und
wenn sich keine Kundeneinrichtung, die mit dem ersten Anbieterrandknoten verbunden ist, in der Broadcast-Domäne befindet, Bestimmen, ob die IP-Route in die IP-Routing-Tabelle des ersten Anbieterrandknotens basierend auf einer Importrichtlinie zu importieren ist, wobei der erste Anbieterrandknoten **dadurch gekennzeichnet ist, dass** die Importrichtlinie basierend auf einer Ressourcennutzung der IP-Routing-Tabelle des ersten Anbieterrandknotens bestimmt wird.

10. Erster Anbieterrandnoten nach Anspruch 9, wobei der erste Anbieterrandknoten ferner dazu betreibbar ist, das Verfahren nach einem der Ansprüche 2 bis 8 durchzuführen.

11. Computerlesbares Speichermedium, auf dem Anweisungen gespeichert sind, die bei Ausführung durch mindestens einen Prozessor den mindestens einen Prozessor dazu veranlassen, das Verfahren nach einem der Ansprüche 1 bis 8 durchzuführen.

12. Computerprogrammprodukt, umfassend Anweisungen, die bei Ausführung durch mindestens einen Prozessor den mindestens einen Prozessor dazu veranlassen, das Verfahren nach einem der Ansprüche 1 bis 8 durchzuführen.

## Revendications

1. Procédé (200) exécuté par un premier nœud de périphérie de fournisseur dans un réseau, comprenant :
la réception (202) d'une route de protocole internet, IP, pour un dispositif client dans un domaine de diffusion en provenance d'un second nœud de périphérie de fournisseur dans le réseau ; et
la détermination (204) du fait de savoir s'il convient d'importer la route IP dans une table de routage IP du premier nœud de périphérie de fournisseur sur la base d'une politique, dans lequel la détermination comprend :
lorsqu'au moins un dispositif client relié au premier nœud de périphérie de fournisseur se trouve dans le domaine de diffusion, la décision d'importer la route IP dans la table de routage IP du premier nœud de périphérie de fournisseur ; et
lorsqu'aucun dispositif client relié au premier nœud de périphérie de fournisseur ne se trouve dans le domaine de diffusion, la détermination du fait de savoir s'il convient d'importer la route IP dans la table de routage IP du premier nœud de périphérie de fournisseur sur la base d'une politique d'importation, le procédé étant **caractérisé en ce que** la politique d'importation soit déterminée sur la base de l'utilisation des ressources de la table de routage IP du premier nœud de périphérie de fournisseur.

2. Procédé selon la revendication 1, comprenant en outre :
l'importation (306) de la route IP dans la table de routage IP du premier nœud de périphérie de fournisseur lorsqu'il est décidé d'importer la route IP dans la table de routage IP du premier nœud de périphérie de fournisseur ; et/ou
l'omission (308) de l'importation de la route IP dans la table de routage IP du premier nœud de périphérie de fournisseur lorsqu'il est décidé d'omettre l'importation de la route IP dans la table de routage IP du premier nœud de périphérie de fournisseur.

3. Procédé selon la revendication 1 ou 2, dans lequel la politique d'importation est en outre basée sur un commande administratif.

4. Procédé selon la revendication 1 ou 3, dans lequel la politique d'importation comprend au moins un des éléments suivants :
lorsque la consommation de ressources est supérieure ou égale à un seuil, la désactivation de l'importation de route IP,
lorsque la consommation de ressources est inférieure au seuil, l'activation de l'importation de route IP,
lorsqu'une configuration indique l'activation de l'importation de route IP, l'activation de l'importation de route IP, ou
lorsqu'une configuration indique la désactivation de l'importation de route IP, la désactivation de l'importation de route IP.

5. Procédé selon l'une quelconque des revendications 1 à 4, dans lequel la route IP comprend une route d'annonce de commande d'accès au support/protocole internet, MAC/IP, de réseau privé virtuel Ethernet, EVPN.

6. Procédé selon l'une quelconque des revendications 1 à 5, dans lequel la table de routage IP comprend une table de routage et de transfert de réseau privé virtuel, VPN, pour des routes IP.

7. Procédé selon l'une quelconque des revendications 1 à 6, dans lequel le domaine de diffusion correspond à un réseau local virtuel, VLAN.

8. Procédé selon l'une quelconque des revendications 1 à 7, dans lequel le réseau comprend une fonctionnalité de routage et de pontage intégrés, IRB, de réseau privé virtuel Ethernet, EVPN.

9. Premier nœud de périphérie de fournisseur (600) dans un réseau, comprenant :
un processeur (621) ; et
une mémoire (622) reliée au processeur (621), ladite mémoire (622) contenant des instructions exécutables par ledit processeur (621), grâce auxquelles ledit premier nœud de périphérie de fournisseur (600) est agencé pour :
recevoir une route de protocole Internet, IP, pour un dispositif client dans un domaine de diffusion en provenance d'un second nœud de périphérie de fournisseur dans le réseau ; et
déterminer s'il convient d'importer la route IP dans une table de routage IP du premier nœud de périphérie de fournisseur sur la base d'une politique, dans lequel, pour déterminer s'il convient d'importer la route IP, le premier nœud de périphérie de fournisseur est agencé pour :
lorsqu'au moins un dispositif client relié au premier nœud de périphérie de fournisseur se trouve dans le domaine de diffusion, décider d'importer la route IP dans la table de routage IP du premier nœud de périphérie de fournisseur ; et
lorsqu'aucun dispositif client relié au premier nœud de périphérie de fournisseur ne se trouve dans le domaine de diffusion, déterminer s'il convient d'importer la route IP dans la table de routage IP du premier nœud de périphérie de fournisseur sur la base d'une politique d'importation, le premier nœud de périphérie de fournisseur étant **caractérisé en ce que** la politique d'importation soit déterminée sur la base de l'utilisation des ressources de la table de routage IP du premier nœud de périphérie de fournisseur.

10. Premier nœud de périphérie de fournisseur selon la revendication 9, dans lequel le premier nœud de périphérie de fournisseur est en outre agencé pour exécuter le procédé selon l'une quelconque des revendications 2 à 8.

11. Support de stockage lisible par ordinateur stockant des instructions qui, lorsqu'elles sont exécutées par au moins un processeur, amènent ledit au moins un processeur à exécuter le procédé selon l'une quelconque des revendications 1 à 8.

12. Produit programme informatique comprenant des instructions qui, lorsqu'elles sont exécutées par au moins un processeur, amènent ledit au moins un processeur à exécuter le procédé selon l'une quelconque des revendications 1 à 8.
